Europäisches Patentamt

European Patent Office

Office européen des brevets

(19)

(11)  **EP 0 777 597 B1**

(12)  **EUROPÄISCHE PATENTSCHRIFT**

(45) Veröffentlichungstag und Bekanntmachung des
Hinweises auf die Patenterteilung:
**21.10.1998  Patentblatt 1998/43**

(21) Anmeldenummer: 95917271.9

(22) Anmeldetag: 05.05.1995

(51) Int. Cl.$^6$: **B60T 8/00**, H01F 7/18

(86) Internationale Anmeldenummer:
**PCT/DE95/00588**

(87) Internationale Veröffentlichungsnummer:
**WO 96/05992 (29.02.1996  Gazette 1996/10)**

(54) **VERFAHREN UND VORRICHTUNG ZUR ANSTEUERUNG EINES ELEKTROMAGNETISCHEN VENTILS**

METHOD AND DEVICE FOR CONTROLLING AN ELECTROMAGNETIC VALVE

PROCEDE ET DISPOSITIF D'EXCITATION D'UNE ELECTROVANNE

(84) Benannte Vertragsstaaten:
**AT DE FR GB IT**

(30) Priorität: **22.08.1994 DE 4429373**

(43) Veröffentlichungstag der Anmeldung:
**11.06.1997  Patentblatt 1997/24**

(73) Patentinhaber: **ROBERT BOSCH GMBH
70442 Stuttgart (DE)**

(72) Erfinder:
• **EICHHORN, Alexander
D-74172 Neckarsulm (DE)**
• **WISS, Helmut
D-71696 Möglingen (DE)**

(56) Entgegenhaltungen:
EP-A- 0 376 493     EP-A- 0 452 562
DE-A- 3 623 908     DE-A- 4 140 586
DE-A- 4 141 354     DE-A- 4 305 488

## Beschreibung

### Stand der Technik

Die Erfindung betrifft ein Verfahren und eine Vorrichtung zur Ansteuerung eines elektromagnetischen Ventils, insbesondere eines elektromagnetischen Ventils einer Bremsanlage mit Blockierschutz und/oder einer Antriebsschlupfregelung.

Ein solches Verfahren und eine solche Vorrichtung sind aus der DE-A-4 141 354 bekannt. Dort werden ein Verfahren und eine Vorrichtung beschrieben, bei denen durch die Variation der Frequenz, der Pulsbreite oder des Pulsdauer/Pulspausenverhältnis das Ventil so angesteuert wird, daß die Ventilnadel eine Schwimmstellung einnimmt, jedoch nicht vollständig öffnet oder schließt.

Des weiteren ist aus der DE-A-4 110 254 eine Vorrichtung zur Ansteuerung eines elektromagnetischen Ventils bekannt. Dort wird der Ansteuerstrom beim Ansteuern des Ventils einmal oder mehrmals unterbrochen, um ein sanftes Schließen des Magnetventils zu erzielen und störende hydraulische Geräusche zu vermeiden.

Bei hydraulischen Bremsanlagen mit Blockierschutz- und/oder Antriebsschlupfregelung treten besonders beim Öffnen und Schließen des Magnetventils Geräusche auf. Diese Geräusche können mit der Einrichtung gemäß dem Stand der Technik nicht vermieden werden.

### Aufgabe der Erfindung

Der Erfindung liegt die Aufgabe zugrunde, bei einem Verfahren und einer Vorrichtung zur Ansteuerung eines elektromagnetischen Ventils der eingangs genannten Art die auftretenden Geräusche beim Schalten des Ventils zu minimieren. Diese Aufgabe wird durch die in den unabhängigen Ansprüchen gekennzeichneten Merkmale gelöst.

### Vorteile der Erfindung

Durch die erfindungsgemäße Ausbildung des Verlaufs des Ansteuerstroms wird ein starkes Aufschlagen der Ventilnadel am Anschlag vermieden, da der Hub kleiner ist und weniger schnell durchfahren wird. Auch werden die sonst beim Öffnen entstehenden hydraulischen Schwingungen nicht erzeugt und somit eine deutliche Minderung der Schallemission erzielt.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert.

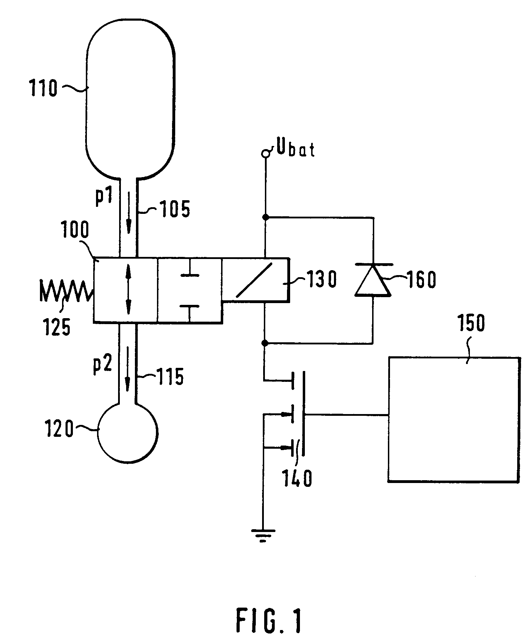

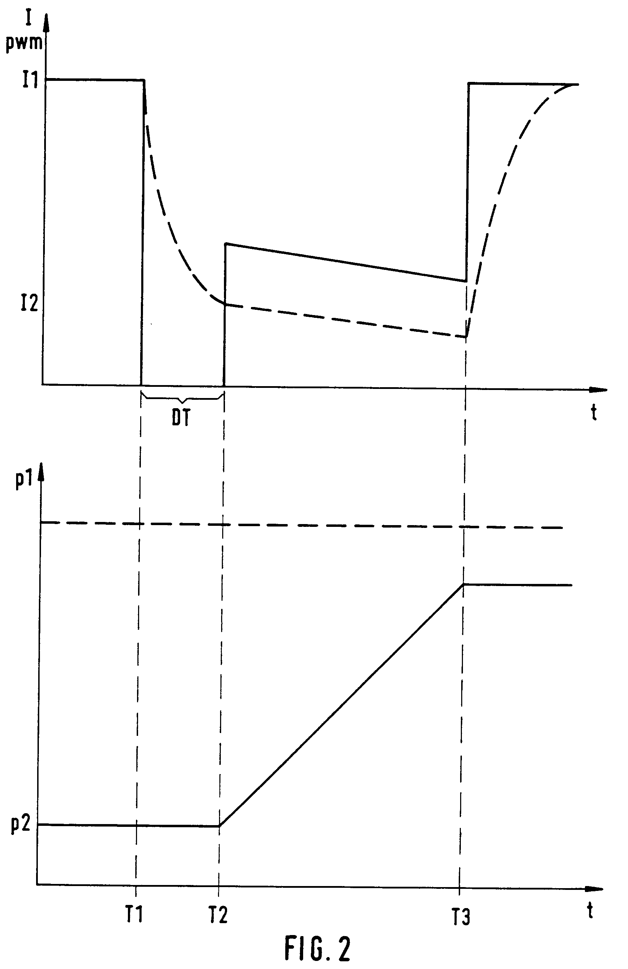

Es zeigen Figur 1 eine schematische Darstellung der wesentlichen Elemente der erfindungsgemäßen Vorrichtung und Figur 2 verschiedene über der Zeit aufgetragene Signale.

### Beschreibung der Ausführungsbeispiele

Es ist bekannt, daß zur Modulation des Drucks in den einzelnen Radbremsen eines Fahrzeugs, das mit einer Blockierschutz- oder Antriebsschlupfregelung ausgerüstet ist, elektrisch betätigbare Einlaß- und Auslaßventile verwendet werden. Hierzu dienen vorzugsweise Zweiwegeventile, also Hydraulikventile, die nur zwei Schaltpositionen (offen oder geschlossen) aufweisen. Der gewünschte Druckauf- oder -abbaugradient wird durch Ansteuerung der Ventile mit Pulsfolgen und variieren der Pulsdauer-/Pulspausenverhältnisse erreicht.

Das Einlaßventil, das in der Bremsleitung zwischen dem Bremsdruckgeber bzw. dem Hauptzylinder und der Radbremse eingefügt ist, ist im allgemeinen in seiner Ruhestellung auf Durchlaß geschaltet, während das Auslaßventil, das zum Druckabbau dient, in der Ruhestellung den Druckmittelweg zur Rückförderpumpe oder zum Druckausgleichsbehälter sperrt.

Anstelle der Einlaß-/Auslaßventilpaare können auch Ventilanordnungen mit drei Schaltpositionen (Druckaufbau, Druckkonstandhaltung und Druckabbau) verwendet werden.

Desweiteren sind sogenannte Proportionalventile bekannt, die einem dem Ansteuersignal proportionale Durchlaßöffnung freigeben. Solche Proportionalventile sind teuer und bedürfen einer aufwendigen Ansteuerung.

Nachteilig bei der bekannten Regelung mit Hilfe der schnell schaltenden Ventile ist, daß durch die schnellen Ankerbewegungen, örtliche Verzögerungen und Beschleunigungen der hydraulischen Flüssigkeit, erhebliche Geräusche entstehen. Solche Geräusche werden bei einer Blockierschutz- oder Antriebsschlupfregelung als störend empfunden. Besonders störend sind diese Geräusche, wenn mittels der Antriebsschlupfregelung ein aktiver Bremseingriff insbesondere für eine Fahrgeschwindigkeitsbegrenzung oder eine Fahrgeschwindigkeitsregelung durchgeführt wird.

In Figur 1 sind die Verhältnisse am Beispiel eines Einlaßventils einer Blockierschutz- und/oder Antriebsschlupfregelung dargestellt. Die beschriebene Ansteuerung ist nicht allein auf die Ansteuerung des Einlaßventils bei einer Bremsanlage mit Blockierschutz- und/oder Antriebsschlupfregelung beschränkt. Bei diesem Einlaßventil ergeben sich aber die größten Verbesserungen im Rahmen der Geräuschemission. Die beschriebene Vorgehensweise kann aber auch bei anderen Ventilen im Bereich der Bremsanlage oder bei anderen Anwendungen, bei denen entsprechende Probleme auftreten, verwendet werden.

Das Einlaßventil 100 steht über seinen ersten Anschluß über eine erste Leitung 105 mit dem Hauptbremszylinder 110 in Verbindung. In der ersten Leitung herrscht ein Druck P1. Über eine zweite Leitung 115 steht der zweite Anschluß des Magnetventils 100 mit der Radbremse 120 in Verbindung. In der zweiten Leitung herrscht der Druck P2.

Bei dem dargestellten Magnetventil handelt es sich um ein sogenanntes 2/2-Magnetventil, das zwei Endstellungen einnehmen kann. In der Ruhestellung, solange kein Strom (zweiter Wert) fließt, gibt das Magnetventil 100 den Durchfluß zwischen der ersten Leitung 105 und der zweiten Leitung 115 frei. In dieser Stellung wird der Magnetventilanker durch eine Feder 125 gehalten. Durch Bestromen einer Spule 130 mit einem ersten Wert I1, wird eine Kraft entgegen der Federkraft FF ausgeübt, die das Ventil in seine Schließstellung bringt. Die erfindungsgemäße Vorgehensweise ist auch auf Magnetventile anwendbar, die in Ihrem bestromten Zustand den Durchfluß freigeben.

Die Spule 130 steht mit ihrem ersten elektrischen Anschluß mit einer Versorgungsspannung Ubat und mit einem zweiten Anschluß mit einem Schaltmittel 140 in Verbindung. Als Schaltmittel wird vorzugsweise ein Feldeffekttransistor verwendet. Der Steueranschluß des Schaltmittels bzw. der Gate-Anschluß des Feldeffekttransistors 140 steht mit einer Steuereinheit 150 in Verbindung. Durch Schließen des Schaltmittels wird der Stromfluß von der Versorgungsspannung durch die Spule 130 durch das Schaltmittel 140 zum Masseanschluß freigegeben.

Zwischen dem ersten und zweiten Anschluß der Spule 130 ist eine Freilaufdiode 160 geschaltet. Hierbei steht die Kathode der Diode mit der Versorgungsspannung und die Anode mit dem Schaltmittel in Verbindung.

Bei der Steuereinheit 150 handelt es sich vorzugsweise um eine Blockierschutz- und/oder Antriebsschlupfregelung. Diese verarbeitet verschiedene Signale verschiedener Sensoren bzw. anderer Steuereinheiten, wie beispielsweise einer Fahrgeschwindigkeitsregelung oder einer Fahrgeschwindigkeitsbegrenzung.

Ausgehend von diesen nicht dargestellten Signalen bestimmt die Steuereinheit 150 Signale zur Ansteuerung der Spule 130 des elektromagnetischen Ventils 100. Wird die Spule 130 mit Strom beaufschlagt, so bringt die Spule eine Kraft FM auf. Diese Kraft FM bewirkt, daß das Magnetventil in seine zweite Stellung die Schließstellung übergeht. In diesem Fall ist kein Druckausgleich zwischen der ersten Leitung 105 und der zweiten Leitung 115 möglich.

Es bildet sich eine Druckdifferenz aus, die der Differenz zwischen den Druckwerten P1 und P2 entspricht. Dabei ist der Druck P2 kleiner als der Druck P1.

Vorzugsweise wird das Schaltmittel 140 von der Steuereinheit 150 mit einem pulsweitenmodulierten Signal beaufschlagt, es kann aber auch eine andere Ansteuerung vorgesehen sein. Abhängig von dem Tastverhältnis PWM des pulsweitenmodulierten Signals fließt durch die Spule 130 ein entsprechender Strom I. Für die von der Spule aufgebrachte Kraft FM gilt die Beziehung:

$$FM = A * I + B$$

Hierbei handelt es sich bei A und B um Konstanten.

Um das Magnetventil gegenüber der Kraft der Feder FF zu bewegen, ist eine resultierende Kraft FZ erforderlich. Um eine resultierende Kraft FZ zur Bewegung des Magentventilankers aufzubringen, ist ein dritter Wert I2 für den Strom erforderlich, der sich gemäß der folgenden Gleichung ergibt:

$$I2 = (FF + FD - FZ - B) / A$$

Hierbei ist die Kraft FD von der Druckdifferenz zwischen dem Druck P1 in der ersten Leitung 105 und dem Druck P2 in der zweiten Leitung 115 abhängig.

Das Magnetventil wird derart angesteuert, daß es von seiner Schließstellung nicht vollständig in seine Öffnungsstellung übergeht, sondern eine Zwischenposition einnimmt. Diese Zwischenstellung hängt von der resultierenden Kraft FZ ab. Durch Einstellen des Stroms auf einen Wert I2 kann bei bekanntem Differenzdruck und damit bekannter Kraft FD eine bestimmte resultierende Kraft FZ und damit ein bestimmter Öffnungsquerschnitt und Druckgradient eingestellt werden.

Der Wert I2 ist so gewählt, daß er zwischen dem ersten Stromwert I1 und dem zweiten Stromwert liegt. Der erste Stromwert I1 hält das Magnetventil in seiner geschlossenen Position. Der zweite Stromwert hält das Magnetventil in seiner geöffneten Position. Bei der dargestellten Ausführungsform ist dieser Wert Null.

Es wird also abhängig von dem Differenzdruck zwischen dem Druck P1 in der ersten Leitung und dem Druck P2 in der zweiten Leitung ein Strom I2 vorgegeben, um einen bestimmten Druckabbau zu erzielen. Bei dem bevorzugten Ausführungsbeispiel erfolgt dies dadurch, daß das Schaltmittel 140 mit einem bestimmten Tastverhältnis eines pulsweitenmodulierten Signals angesteuert wird. Das Tastverhältnis entspricht dem Verhältnis zwischen der Einschaltdauer und der Periodendauer des pulsweitenmodulierten Ansteuersignals.

Alternativ zu der Ansteuerung mit einem pulsweitenmodulierten Signal, kann auch vorgesehen sein, daß durch Verwendung eines geeigneten Schaltmittels, insbesondere eines Transistors, durch Vorgabe einer entsprechenden Steuerspannung sich ein entsprechender Stromverlauf einstellt.

In Figur 2 sind über der Zeit das Tastverhältnis PWM des pulsweitenmodulierten Signals, der Strom I durch das Magnetventil, und die Drücke P1 und P2 über der Zeit aufgetragen.

In Figur 2a ist das Tastverhältnis (PWM) des pulsweitenmodulierten Signals mit einer durchgezogenen Linie aufgetragen. Der resultierende Strom I ist mit einer gestrichelt gezeichneten Linie aufgetragen. In Figur 2b ist der Druck P1 mit einer gestrichelt gezeichneten Linie und der Druck P2 mit einer durchgezogenen Linie aufgetragen.

Der Druck P1 nimmt in erster Näherung einen konstanten Wert an. Der Druck P2 nimmt bei geschlossenem Magnetventil einen niederen Wert an und steigt dann beim Öffnen des Magnetventils nahezu linear auf einen zweiten Wert an, der etwas unter dem Wert des Drucks P1 liegt. Der Wert um den der Druck innerhalb einer bestimmten Zeit ansteigt wird als Druckgradient bezeichnet. Insbesondere zwischen den Zeitpunkten T2 und T3 kann Druck auch andere Verläufe über der Zeit annehmen.

Bis zum Zeitpunkt T1 wird ein Tastverhältnis vorgegeben, das einen Strom mit dem ersten Wert I1 zur Folge hat. Vorzugsweise wird hier ein Tastverhältnis von 1 vorgegeben, das bedeutet, daß das Schaltmittel 140 ständig geschlossen ist. Der Stromwert I1 ist der Stromwert, der erforderlich ist, um das Magnetventil in seiner geschlossenen Stellung zu halten.

Bis zum Zeitpunkt T1 befindet sich das Magnetventil in seinem geschlossenen Zustand. Zwischen dem Zeitpunkt T1 und T2 öffnet das Magnetventil. In der Figur 2 ist der Fall dargestellt, daß das Magnetventil erst umittelbar vor dem Zeitpunkt T2 öffnet.

Zum Zeitpunkt T1 gibt die Steuereinheit 150 ein Signal vor, das einem Aufbau des Drucks P2 in der Radbremse bewirken soll. Daher wird zum Zeitpunkt T1 das Tastverhältnis auf einen kleineren Wert zurückgenommen. In dem dargestellten Beispiel wird ab dem Zeitpunkt T1 ein Tastverhältnis von 0 vorgegeben, dies bedeutet, daß das Schaltmittel 140 geöffnet ist. Auf Grund der Freilaufdiode 160 nimmt der Strom I, der durch die Spule 130 fließt, über der Zeit t exponentiell auf den dritten Wert I2 ab, der oberhalb des zweiten Werts liegt, bei dem sich das Magnetventil in seiner Durchflußstellung befindet.

Zum Zeitpunkt T2 erreicht der Strom seinen dritten, gewünschten Wert I2. Ab diesem Zeitpunkt wird ein Tastverhältnis vorgegeben, das erforderlich ist, um den Strom I2 aufrechtzuerhalten. Das Tastverhältnis PWM wird entsprechend gewählt.

Für die Zeitspanne DT zwischen dem Zeitpunkt T1 und T2, gilt bei der dargestellten Anordnung mit Freilaufdiode und einer Pulsweitenmodulierten Ansteuerung die Beziehung:

$$DT = - T * \ln (PWM)$$

Bei der Größe PWM handelt es sich um das Tastverhältnis, das durch die Beziehung

$$PWM = I2/I1$$

definiert ist. Bei der Größe T handelt es sich um eine Konstante, die im wesentlichen von der Induktivität und dem ohmschen Widerstand der Spule abhängt.

Ab dem Zeitpunkt T2 wird der Schalter 140 wieder mit einem pulsweitenmodulierten Signal angesteuert. Das Tastverhältnis wird so gewählt, daß sich der Strom I2 einstellt. Der Zeitraum DT zwischen den Zeitpunkten T1 und T2 wird so gewählt, daß sich der zweite, bestimmte Stromwert I2 und damit eine bestimmte Durchflußmenge einstellt.

Dies hat zur Folge, daß der Druck P2 über der Zeit ansteigt. Für den Zeitraum DT gilt die Beziehung:

$$DT = - T * \ln ((FF + FD - FZ - B) / A * I2)$$

Um eine bestimmte resultierende Kraft FZ und damit einen bestimmten Druckgradienten einstellen zu können, muß der Differenzdruck FD zwischen der ersten und der zweiten Leitung berechnet und/oder gemessen werden. Die übrigen Größen sind Konstanten und können fest vorgegeben werden. Bei bekanntem Differenzdruck kann durch Vorgabe der Zeit DT ein beliebiger Stromwert I2 und damit eine beliebige resultierende Kraft und somit ein bestimmter Druckgradient eingestellt werden.

Mittels der Vorgabe der Zeit DT, in dem das Schaltmittel 140 geöffnet ist, wird ein bestimmter Stromwert I2 eingestellt. Der Stromwert I2 ist derjenige Stromwert, der erforderlich ist, um das Magnetventil in einer Dosierstellung zu halten, bzw. um einen gewünschten Druckgradienten einzustellen.

Zwischen dem Zeitpunkt T2 und T3 befindet sich das Magnetventil in einer Zwischenstellung zwischen der Schließstellung und der Öffnungsstellung. Während dieser Zeit steigt der Druck P2 über der Zeit t mit einer bestimmten Steigung, die als Druckgradient bezeichnet wird, an. Die Steigung des Druckanstiegs ist vom Stromwert I2 abhängig und kann durch Vorgabe der Zeit DT und/oder durch Vorgabe des Tastverhältnisse eingestellt werden. Der Zeitabstand zwischen den Zeitpunkten T2 und T3 bestimmt den Wert des Druckes P2 und damit die Bremskraft. Abhängig von der Zeitdauer DT fällt der Strom auf unterschiedliche Werte I2 ab. Damit ergeben sich unterschiedliche Druckgradienten und es kann ein unterschiedlich schneller Druckaufbau beim Druck P2 erzielt werden. Je länger der Zeitraum DT ist, um so stärker fällt der Strom ab und um so weiter öffnet das Magnetventil. In dieser Phase wird das 2/2-Magnetventil so angesteuert, daß es sich ähnlich wie ein Proportionalventil verhält.

Zum Zeitpunkt T3 wird das Tastverhältnis wieder auf den Wert 1 erhöht, was zur Folge hat, daß der Strom, der durch die Spule 130 fließt, gemäß einer E-Funktion wieder auf den ursprünglichen Wert I1 ansteigt und das Magnetventil wieder in seine geschlossene Stellung übergeht. Dies hat zur Folge, daß der Druck P2 auf konstantem Niveau bleibt. Der Strom I steigt in dieser Phase expotentiell wieder auf seinen Ausgangswert an.

Bei dem bevorzugten Beispiel nimmt das Tastverhältnis, das mit einer durchgezogenen Linie eingezeichnet ist, zwischen den Zeitpunkten T2 und T3 über der Zeit etwas ab. Dies hat zur Folge, daß der Strom, der durch das Magnetventil fließt, ebenfalls etwas abnimmt. Dies geschieht vor dem Hintergrund, daß sich der Druckdifferenz, das heißt die Differenz zwischen dem Druck P2 und P1 in dieser Zeitphase verringert. Dadurch verringert sich auch die Kraft FD, die vom Differenzdruck abhängt. Somit muß nur noch eine geringere magnetische Kraft FM von der Spule 130 aufgebracht werden, um das Magnetventil in seiner erreichten Position zu halten. Dies bedeutet, daß in der zweiten Phase zwischen dem Zeitpunkt T2 und T3 der Strom der Druckänderung über der Zeit nachgeführt wird. Die Abnahme des Stroms zwischen den Zeitpunkten T2 und T3 ist geringer als in der Zeitspanne DT.

**Patentansprüche**

1. Verfahren zur Ansteuerung eines elektromagnetischen Ventils, insbesondere eines elektromagnetischen Ventils einer Bremsanlage mit Blockierschutz- und/oder Antriebsschlupfregelung, wobei das Ventil bei Beaufschlagung mit einem ersten Stromwert (I1) eine erste Stellung und bei Beaufschlagung mit einem zweiten Stromwert (0) eine zweite Stellung einnimmt, dadurch gekennzeichnet, daß beim Umsteuern des Ventils dieses derart ansteuerbar ist, daß in einer ersten Phase für eine vorgebbare Zeit (DT) der Strom gemäß einer ersten Funktion von dem ersten Stromwert (I1) auf einen dritten Stromwert (I2) übergeht und in einer zweiten Phase annähernd konstant bleibt oder einer Druckänderung über der Zeit nachführbar ist, wobei der dritte Stromwert (I2) zwischen dem ersten Wert (I1) und dem zweiten Wert (0) liegt.

2. Verfahren nach Anspruch 1, dadurch gekennzeichnet, daß die erste Funktion so gewählt wird, daß der Strom nach der vorgebbaren Zeit (DT) den vorgebbaren dritten Stromwert (I2) annimmt.

3. Verfahren nach einem der vorhergehenden Ansprüche, dadurch gekennzeichnet, daß der dritte Stromwert (I2) und/oder die vorgebbare Zeit (DT), ausgehend von wenigstens einer Druckdifferenz und/oder einem gewünschten Druckgradienten vorgebbar ist.

4. Verfahren nach einem der vorgehenden Ansprüche, dadurch gekennzeichnet, daß es sich bei dem Ventil um das Einlaßventil bei einer Bremsanlage mit Blockierschutz- und/oder Antriebsschlupfregelung handelt.

5. Vorrichtung zur Ansteuerung eines elektromagnetischen Ventils, insbesondere eines elektromagnetischen Ventils einer Bremsanlage mit Blockierschutz- und/oder Antriebsschlupfregelung, wobei das Ventil bei Beaufschlagung mit einem ersten Stromwert (I1) eine erste Stellung und bei Beaufschlagung mit einem zweiten Stromwert (0) eine zweite Stellung einnimmt, dadurch gekennzeichnet, daß Mittel vorgesehen sind, die beim Umsteuern des Ventils dieses derart ansteuern, daß in einer ersten Phase für eine vorgebbare Zeit (DT) der Strom gemäß einer ersten Funktion von dem ersten Stromwert (I1) auf einen dritten Stromwert (I2) übergeht und in einer zweiten Phase annähernd konstant bleibt oder einer Druckänderung über der Zeit nachführbar ist, wobei der dritte Stromwert (I2) zwischen dem ersten Wert (I1) und dem zweiten Wert (0) liegt.

**Claims**

1. Method for driving a solenoid valve, in particular a solenoid valve of a brake system having anti-lock protection and/or traction slip regulation, the valve assuming a first position when a first current value (I1) is applied to it and assuming a second position when a second current value (0) is applied to it, characterized in that, when it is changed over, the valve can be driven in such a manner that the current changes in accordance with a first function from the first current value (I1) to a third current value (I2) in a first phase for a time (DT) which can be predetermined, and remains approximately constant in a second phase or can be slaved to a pressure change with a respect to time, the third current value (I2) being between the first value (I1) and the second value (0).

2. Method according to Claim 1, characterized in that the first function is selected such that the current assumes the third current value (I2), which can be predetermined, after the time (DT) which can be predetermined.

3. Method according to one of the preceding claims, characterized in that the third current value (I2) and/or the time (DT) which can be predetermined can be predetermined on the basis of at least one pressure difference and/or one desired pressure gradient.

4. Method according to one of the preceding claims, characterized in that the valve is an inlet valve in a brake system having anti-lock protection and/or traction slip regulation.

5. Device for driving a solenoid valve, in particular a solenoid valve of a brake system having anti-lock protection and/or traction slip regulation, the valve assuming a first position when a first current value (I1) is applied to it and assuming a second position when a second current value (0) is applied to it, characterized in that means are provided which drive the valve while it is changing over in such a manner that the current changes in accordance with a first function from the first current value (I1) to a third current value (I2) in a first phase for a time (DT) which can be predetermined, and remains approximately constant in a second phase or can be slaved to a pressure change with respect to time, the third current value (I2) being between the first value (I1) and the second value (0).

**Revendications**

1. Procédé pour commander une vanne électromagnétique, en particulier une vanne électromagnétique d'un système de freinage avec une régulation antiblocage et/ou antipatinage, la vanne, quand elle est alimentée par une première valeur d'intensité (I1), prenant une première position et quand elle est alimentée par une deuxième valeur d'intensité (0) prenant une deuxième position,
caractérisé en ce que
lors de la commutation de la vanne celle-ci peut être excitée d'une manière telle que dans une première phase pendant un (DT) que l'on peut définir au préalable l'intensité passe selon une première fonction de la première valeur d'intensité (I1) à une troisième valeur d'intensité (I2) et dans une seconde phase elle demeure à peu près constante ou peut reproduire une variation de la pression en fonction du temps, la troisième valeur de l'intensité (I2) se trouvant entre la première valeur (I1) et la deuxième valeur (0).

2. Procédé selon la revendication 1,
caractérisé en ce qu'
on choisit la première fonction d'une façon telle que l'intensité prend la troisième valeur (I2), que l'on peut définir au préalable, au bout du temps (DT), que l'on peut définir au préalable.

3. Procédé selon l'une des revendications précédentes,
caractérisé en ce que
la troisième valeur d'intensité (I2) et/ou le temps (DT), que l'on peut définir au préalable, peut être défini au préalable à partir d'au moins une différence de pression et/ou d'un gradient de pression souhaité.

4. Procédé selon l'une des revendications précédentes,
caractérisé en ce qu'
il s'agit en ce qui concerne la vanne de la vanne d'entrée dans le cas d'un système de freinage avec une régulation antiblocage et/ou antipatinage.

5. Dispositif servant à commander une vanne électromagnétique, en particulier une vanne électromagnétique d'un système de freinage avec une régulation antiblocage et/ou antipatinage, la vanne, quand elle est alimentée par une première valeur d'intensité (I1), prenant une première position et quand elle est alimentée par une deuxième valeur d'intensité (0) prenant une deuxième position,
caractérisé en ce que
lors de la commutation de la vanne celle-ci peut être excitée d'une manière telle que dans une première phase pendant un (DT) que l'on peut définir au préalable l'intensité passe selon une première fonction de la première valeur d'intensité (I1) à une troisième valeur d'intensité (I2) et dans une seconde phase elle demeure à peu près constante ou peut reproduire une variation de la pression en fonction du temps, la troisième valeur de l'intensité (I2) se trouvant entre la première valeur (I1) et la deuxième valeur (0).

FIG. 1

FIG. 2